# EUROPÄISCHE PATENTSCHRIFT

(11) **EP 0 952 759 B1**
(45) Veröffentlichungstag und Bekanntmachung des Hinweises auf die Patenterteilung: **26.05.2004**
(21) Anmeldenummer: 99106618.4
(22) Anmeldetag: 31.03.1999
(51) Int. Cl.: H05B 37/04, H02M 1/12, H02H 7/00

(54) **Elektronischer Transformator**
Electronic transformer
Transformateur électronique

(30) Priorität: 20.04.1998 DE 19817569
(43) Veröffentlichungstag der Anmeldung: 27.10.1999
(73) Patentinhaber: TridonicAtco GmbH & Co. KG, 6851 Dornbirn (AT)
(72) Erfinder: Studer, Heinz, Dipl.-Ing., 6721 Blons 86 (AT); Hermann, Hans, Ing., 6890 Lustenau (AT)
(74) Vertreter: Schmidt-Evers, Jürgen, Dipl.-Ing.

(56) Entgegenhaltungen:
- EP-A- 0 264 765
- EP-A- 0 331 157
- EP-A- 0 707 435
- WO-A-96/08124
- DE-A- 4 418 886
- DE-A- 19 500 615
- US-A- 4 625 270

## Beschreibung

Die vorliegende Erfindung betrifft einen elektronischen Transformator zum Betreiben einer Last nach dem Oberbegriff des Anspruches 1. Insbesondere betrifft die vorliegende Erfindung einen elektronischen Transformator zum Betreiben von Niedervolt-Glühlampen, bei dem Unsymmetrien, welche an der Sekundärseite eines Leistungsübertragers des elektronischen Transformators auftreten können, vermieden oder zumindest weitgehend reduziert werden.

Ein als getaktete Stromversorgung für eine Niedervolt-Glühlampe dienender elektronischer Transformator nach dem Oberbegriff des Anspruches 1 ist beispielsweise aus der EP-A-0246765 bekannt. Der elektronische Transformator umfaßt eine Schaltvorrichtung mit einem oder mehreren getakteten Schaltern, wobei die Schaltvorrichtung in der Regel als Gegentaktwandler in Halb- oder Vollbrückenschaltung realisiert ist. Durch das schnelle Schalten der Schalter wird eine Eingangsspannung der Schaltvorrichtung, die beispielsweise der gleichgerichteten Netzspannung entspricht, in eine hochfrequente Wechselspannung umgewandelt, die einem Übertrager zugeführt wird. Der Übertrager wandelt die hochfrequente Wechselspannung der Schaltvorrichtung in eine Betriebsspannung für die Niedervolt-Glühlampe um. Aufgrund des schnellen Schaltens der Schalter können insbesondere zwischen der Schaltvorrichtung bzw. den Anschlußleitungen der Sekundärwicklungen des Übertragers und der Bezugserde Gleichtakt-Störströme auftreten, die über parasitäre Kapazitäten des elektronischen Transformators fließen. Diese Gleichtakt-Störströme können teilweise durch ein eingangsseitig an die Netzzuleitungen angeschlossenes Eingangsfilter unterdrückt werden, welches beispielsweise eine stromkompensierte Drossel aufweist. Mit Hilfe einer derartigen stromkompensierten Drossel können wegen der hohen Induktivität der Drossel hochfrequente Gleichtakt-Störströme ausgefiltert werden. Die Wirkung der stromkompensierten Drossel ist jedoch beschränkt, da dem kompakten Aufbau der Drossel Grenzen gesetzt sind. So kann durch unmittelbar benachbarte Bauteile und deren Störsignale die Filterwirkung der stromkompensierten Drossel vermindert werden. In der EP-A-0264765 ist aus diesem Grund zusätzlich eine Hochfrequenz-Kurzschlußschaltung vorgesehen, die die Sekundärseite des Übertragers mit einem Pol des eingangsseitigen Gleichrichters verbindet. Diese Hochfrequenz-Kurzschlußschaltung weist einen Kondensator auf, wodurch Gleichtakt-Störströme, die durch parasitäre Kapazitäten zwischen der Primär- und der Sekundärwicklung des Übertragers in die Lampenzuleitungen eingekoppelt werden, teilweise kurzgeschlossen werden.

Die Potentiale der beiden Pole der Sekundärseite des Übertragers sind jedoch im allgemeinen assymetrisch bezüglich des Erdpotentials, so daß die entsprechend auftretenden gegenphasigen Potentialänderungen unterschiedliche Amplituden aufweisen, was jedoch einen unerwünschten Gesamt- oder Netto-Gleichtakt-Störstrom zur Folge hat.

Um dieses Problem zu beheben wurde in der EP-A-0707435 daher vorgeschlagen, die aus der EP-A-0264765 bekannte Schaltung des elektronischen Transformators durch ein Symmetriernetzwerk aus passiven Bauelementen zu ergänzen, welches zwischen die Sekundärseite des Übertragers und die Hochfrequenz-Kurzschlußschaltung geschaltet ist, so daß das Symmetriernetzwerk einerseits mit beiden Polen der Sekundärwicklung des Übertragers und andererseits mit der Hochfrequenz-Kurzschlußschaltung verbunden ist. Die Hochfrequenz-Kurzschlußschaltung kann durch einen oder mehrere seriell geschaltete Kondensatoren gebildet sein, während das Symmetriernetzwerk durch ein RC-Netzwerk realisiert ist. Da die zur Funkentstörung dienenden Kondensatoren der Hochfrequenz-Kurzschlußschaltung über das Symmetriernetzwerk mit beiden Polen der Sekundärwicklung des Übertragers verbunden sind, kann eine bessere Symmetrierung der Potentiale an den beiden Polen der Sekundärwicklung des Übertragers gegenüber der Bezugserde bzw. der Umgebung erzielt werden. Das bedeutet, daß sich die Potentiale an den beiden Polen der Sekundärwiclklung des Übertragers zueinander gegenphasig mit annähernd gleicher Amplitude bezüglich der Bezugserde bzw. der Umgebung verändern. Dadurch wird eine Reduzierung des Gesamt-Gleichtakt-Störstroms erzielt, wobei sich im Idealfall die beiden zueinander gegenphasigen Gleichtakt-Störströme, die von den beiden Polen der Sekundärseite des Übertragers und den damit verbundenen Lampenzuleitungen jeweils über parasitäre Kapazitäten zur Bezugserde fließen, vollständig kompensieren.

Ein weiterer elektronische Transformator wird aus der WO 96/08124 bekannt.

Aus der obigen Beschreibung ist ersichtlich, daß durch das Hinzufügen des Symmetriernetzwerkes der Schaltungsaufbau des elektronischen Transformators nicht nur komplizierter und umfangreicher wird, sondern gleichzeitig auch die Herstellungskosten des elektronischen Transformators erhöht werden.

Der vorliegenden Erfindung liegt daher die Aufgabe zugrunde, einen elektronischen Transformator gemäß dem Oberbegriff des Anspruches 1, der eine an die Sekundärseite des Übertragers des elektronischen Transformators angreifende Kurzschlußschaltung aufweist, derart weiterzubilden, daß Unsymmetrien des elektronischen Transformators mit möglichst geringem Aufwand vermieden werden, um somit die Funkentstörung des elektronischen Transformators zu verbessern.

Diese Aufgabe wird gemäß der vorliegenden Erfindung durch einen elektronischen Transformator mit den Merkmalen des Anspruches 1 gelöst. Die Unteransprüche beschreiben vorteilhafte und bevorzugte Ausgestaltungen der vorliegenden Erfindung, die ihrerseits zu einer verbesserten Funkentstörung und möglichst optimalen Symmetrierung des elektronischen Transformators beitragen.

Gemäß der vorliegenden Erfindung umfaßt der elektronische Transformator eine an sich bekannte Kurzschlußschaltung, welche an der Sekundärseite des Übertragers des elektronischen Transformators angreift und diese mit einem bestimmten Bezugspotential wechselstrommäßig kurzschließt. Gemäß der vorliegenden Erfindung entspricht jedoch dieses Bezugspotential einem Symmetriermittelpunkt einer kapazitiven Symmetrierschaltung, die eingangs- bzw. netzseitig eingefügt und somit mit den Eingangsanschlüssen des elektronischen Transformators gekoppelt sein kann.

Die kapazitive Symmetrierschaltung kann beispielsweise aus zwei oder mehr Kondensatoren bestehen, die zwischen Phase und Nulleiter eingefügt werden, so daß durch die Kondensatoren des kapazitiven Symmetriernetzwerkes ein kapazitiver Spannungsteiler gebildet wird, der insbesondere vor einen Eingangsgleichrichter des elektronischen Transformators geschaltet ist.

Die Kurzschlußschaltung kann einen oder mehr in Serie geschaltete Kondensatoren umfassen, wobei insbesondere die Verwendung von zwei in Serie geschalteten Kondensatoren gleicher Kapazität vorteilhaft ist, da in diesem Fall auch im Falle eines Defekts, d. h. eines Kurzschlusses, eines der beiden Kondensatoren weiterhin die Lampenanschlüsse des elektronischen Transformators zum Schutz einer Bedienperson von der Netzspannung getrennt sind.

Der Übertrager des elektronischen Transformators kann lediglich eine Sekundärwicklung oder aber mehrere parallel geschaltete Sekundärwicklungen aufweisen. Die Symmetrierung des elektronischen Transformators kann weiter dadurch verbessert werden, daß die Kurzschlußschaltung nicht an den Anschlußleitungen der Sekundärwicklung des Übertragers angreift, sondern mit einem Mittelabgriff mindestens einer Sekundärwicklung des Übertragers verbunden ist. Des weiteren kann - wie in der EP-A-0707435 vorgeschlagen ist - ein Symmetriemetzwerk eingesetzt werden, welches zwischen die Kurzschlußschaltung und die Anschlußleitungen der Sekundärwicklung(en) des Übertragers geschaltet ist.

Die vorliegende Erfindung ermöglicht durch eine einfache schaltungstechnische Maßnahme eine verbesserte Symmetrierung des elektronischen Transformators. Der Netto- bzw. Gesamt-Gleichtstrom kann im Idealfall eliminiert werden, da sich die beiden zueinander gegenphasigen Gleichtakt-Störströme, die von den beiden Polen der Sekundärseite des Übertragers und den damit verbundenen Lampenzuleitungen jeweils über parasitäre Kapazitäten zur Bezugserde fließen, kompensieren. Bei einer entsprechenden Dimensionierung des elektronischen Transformators kann mit Hilfe der vorliegenden Erfindung die Funkentstörung des elektronischen Transformators um ca. 5 bis 10dB verbessert werden.

Die Erfindung wird nachfolgend anhand bevorzugter Ausführungsbeispiele unter Bezugnahme auf die beigefügte Zeichnung erläutert.
Figur 1 zeigt ein Schaltbild eines elektronischen Transformators gemäß einem ersten Ausführungsbeispiel der vorliegenden Erfindung,
Figur 2 zeigt ein Schaltbild eines elektronischen Transformators gemäß einem zweiten Ausführungsbeispiel der vorliegenden Erfindung,
Figur 3 zeigt ein Schaltbild eines elektronischen Transformators gemäß einem dritten Ausführungsbeispiel der vorliegenden Erfindung, und
Figur 4 zeigt ein Schaltbild eines elektronischen Transformators gemäß einem vierten Ausführungsbeispiel der vorliegenden Erfindung.

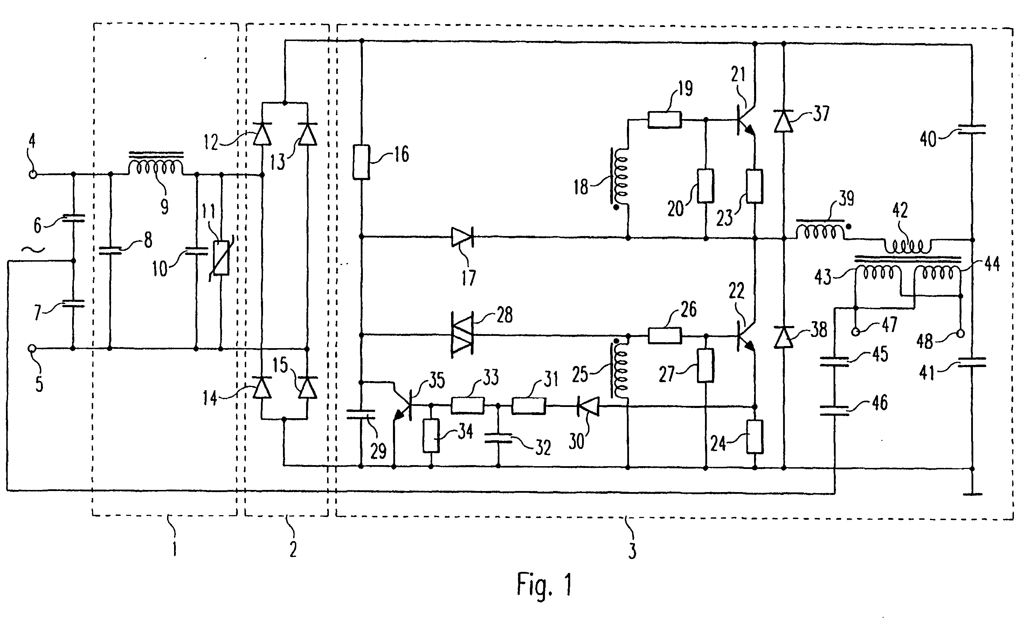

Figur 1 zeigt ein erstes Ausführungsbeispiel des erfindungsgemäßen elektronischen Transformators zum Betreiben einer Niedervolt-Halogenglühlampe.

Der in Figur 1 dargestellte elektronische Transformator besitzt Eingangsanschlüsse 4, 5, an denen eine Netzwechselspannung empfangen wird. Diese Netzwechselspannung wird zunächst einem Eingangsfilter 1 zugeführt, welches gemäß dem vorliegenden Beispiel aus einem LC-Netzwerk mit Kondensatoren 8, 10 und einer Spule 9 sowie einem als Sicherung dienenden spannungsabhängigen Widerstand 11 (VDR) besteht. Mit Hilfe des Eingangsfilters 1 können hochfrequente Gleichtakt-Störströme, die über parasitäre Kapazitäten fließen, wenigstens teilweise unterdrückt werden.

Die durch das Eingangsfilter 1 geglättete Netzwechselspannung wird anschließend einem Gleichrichter 2 mit vier zu einer Diodenvollbrücke verschalteten Dioden 12-15 zugeführt, so daß der Gleichrichter 2 eine der Netzspannung entsprechende pulsierende Gleichspannung erzeugt.

Die von dem Gleichrichter 2 erzeugte Gleichspannung wird einem Wandler bzw. einer Schaltvorrichtung 3 zugeführt, die insbesondere als selbstschwingender Wechselrichter ausgestaltet ist und die von dem Gleichrichter 2 erzeugte Gleichspannung in eine hochfrequente Wechselspannung umwandelt. Gemäß dem in Figur 1 dargestellten Ausführungsbeispiel umfaßt der selbstschwingende Wechselrichter 3 zwei zu einer Halbbrücke verschaltete alternierend angesteuerte Schaltelemente 21 und 22 sowie entsprechende Brückenkondensatoren 40 und 41. Gemäß dem vorliegenden Ausführungsbeispiel sind die beiden Schaltelemente 21 und 22 durch Bipolartransistoren realisiert. Ebenso können jedoch auch MOS-Feldeffekttransistoren usw. eingesetzt werden. Jeder Schalter 21, 22 wird eingangsseitig über eine Sekundärwicklung 18 bzw. 25 eines Rückkopplungsübertragers sowie Widerstände 19, 20 bzw. 26, 27 angesteuert. Die Primärwicklung 39 des Rückkopplungsübertragers befindet sich im Lastkreis des Wechselrichters. Die beiden Schalter 21, 22 werden abwechselnd durch die an den Sekundärwicklungen 18 bzw. 25 anliegenden Spannungen des Rückkopplungsübertragers geschaltet, so daß abwechselnd der Stromkreis über den Schalter 21 bzw. den Schalter 22, einen Widerstand 23 bzw. 24, die Primärwicklung 39 des Rückkopplungsübertragers, die Primärwicklung 42 eines Leistungsübertragers und einen der Brückenkondensatoren 40 bzw. 41 geschlossen wird. Der Wechselrichter 3 wird gestartet, indem nach Einschalten des elektronischen Transformators zunächst über einen Ladewiderstand 16 ein eingangsseitiger Ladekondensator 29 des Wechselrichters 3 aufgeladen wird bis die an dem Ladekondensator 29 anliegende Spannung die Störspannung eines als Triggerelement vorgesehenen Diacs 28 erreicht hat. In diesem Fall schaltet der Diac 28 durch, so daß an der Basis des Bipolartransistors 22 ein Steuersignal anliegt und der Wechselrichter 3 zum Schwingen angeregt wird. Nach Durchschalten des Bipolartransistors 22 wird der Ladekondensator 29 über ein Entladenetzwerk mit einer Diode 30, einem Kondensator 32, Widerständen 31, 33 und 34 sowie einem Bipolartransistor 35 in Kombination mit einer weiteren Diode 17 entladen. Des weiteren sind Freilaufdioden 37 und 38 parallel zu den Bipolartransistoren 21 und 22 geschaltet.

Neben der Primärwicklung 39 des Rückkopplungsübertragers befindet sich im Lastkreis des Wechselrichters 3 auch die bereits zuvor erwähnte Primärwicklung 42 eines Leistungsübertragers, der die von dem Wechselrichter 3 gelieferte hochfrequente Wechselspannung in eine geeignete Betriebsspannung für eine an Ausgangsanschlüssen 47 und 48 anschließbare Last, insbesondere in Form einer Niedervolt-Halogenglühlampe, umwandelt. Bei dem in Figur 1 dargestellten Ausführungsbeispiel sind mit der Primärwicklung 42 zwei parallel geschaltete Sekundärwicklungen 43 und 44 des Übertragers gekoppelt.

An den Ausgangsanschluß 47 bzw. an einen Pol der beiden Sekundärwicklungen 43 und 44 des Leistungsübertragers greift eine Kurzschlußschaltung an, die gemäß dem vorliegenden Ausführungsbeispiel aus zwei in Serie geschalteten Kondensatoren 45, 46 besteht. Die Kurzschlußschaltung mit den Kondensatoren 45, 46 verbindet die Sekundärseite des Leistungsübertragers wechselstrommäßig mit einem Bezugspotential, wobei gemäß der vorliegenden Erfindung das Bezugspotential eines Symmetriermittelpunkt einer kapazitiven Symmetrierschaltung entspricht. Bei dem in Figur 1 dargestellten Ausführungsbeispiel ist die kapazitive Symmetrierschaltung durch einen an die Eingangsanschlüsse 4, 5 angeschlossenen eingangsseitigen kapazitiven Spannungsteiler mit zwei in Serie geschalteten Kondensatoren 6, 7 gebildet, wobei das Bezugspotential für die Hochfrequenz-Kurzschlußschaltung (mit den Kondensatoren 45, 46) dem Knotenpunkt zwischen den Kondensatoren 6, 7 der eingangsseitigen kapazitiven Symmetrierschaltung entspricht. Selbstverständlich kann auch ein von der in Figur 1 dargestellten Ausführungsform abweichendes kapazitives Symmetriernetzwerk verwendet werden, solange gewährleistet ist, daß das eine Ende der Hochfrequenz-Kurzschlußschaltung (mit den Kondensatoren 45, 46) mit einem Symmetriermittelpunkt, der bezüglich des Phasenleiters 4 und des Nulleiters 5 vorhanden ist, verbunden ist. Insbesondere kann die kapazitive Symmetrierschaltung auch mehr als zwei Kondensatoren 6, 7 umfassen.

Des weiteren kann die Hochfrequenz-Kurzschlußschaltung auch lediglich einen der Kondensatoren 45 oder 46 oder mehr als zwei Kondensatoren umfassen. Besonders vorteilhaft ist jedoch die Verwendung von zwei in Serie geschalteten Kondensatoren 45, 46 gleicher Kapazität, da in diesem Fall selbst bei Auftreten eines internen Kurzschlusses eines der beiden Kondensatoren 45, 46 weiterhin gewährleistet ist, daß die Lampenanschlüsse 47 und 48 zum Schutz einer Bedienperson von der Netzspannung getrennt sind. Gemäß einem bevorzugten Ausführungsbeispiel der vorliegenden Erfindung besitzen die Kondensatoren 6, 7 der kapazitiven Symmetrierschaltung beispielsweise eine Kapazität von jeweils 12nF, während die Kondensatoren 45, 46 der Kurzschlußschaltung eine Kapazität von 1,5nF aufweisen. Vorteilhaft dabei ist, daß für die Kondensatoren 6, 7 der kapazitiven Symmetrierschaltung eine Spannungsfestigkeit von 400V ausreichend ist. Lediglich für die Kondensatoren 45, 46 der Kurzschlußschaltung ist eine erhöhte Spannungfestigkeit von 4kV erforderlich, um die geforderte Spannungsfestigkeit zwischen der Primär- und der Sekundärseite des Leistungsübertragers von 3,7kV während einer Minute zu gewährleisten.

Anstelle der in Figur 1 dargestellten Anordnung kann selbstverständlich die Kurzschlußschaltung mit den Kondensatoren 45, 46 auch an den anderen Pol 48 der Sekundärseite 43, 44 des Leistungsübertragers angreifen. Des weiteren ist auch der Einsatz von lediglich einer Sekundärwicklung oder von mehr als zwei parallel geschalteten Sekundärwicklungen des Leistungsübertragers möglich.

Aus Figur 1 ist ersichtlich, daß durch eine relativ einfache schaltungstechnische Maßnahme, nämlich das Vorsehen einer eingangs- bzw. netzseitigen kapazitiven Symmetrierschaltung, eine verbesserte Symmetrierung der Potentiale der Pole der Sekundärseite des Leistungsübertragers gegenüber der Bezugserde erzielt werden kann, so daß sich die Potentiale der beiden sekundärseitigen Pole des Leistungsübertragers zueinander gegenphasig im Takt des selbstschwingenden Wechselrichters mit annähernd gleicher Amplitude verändern. Die zueinander gegenphasig verlaufenden Gleichtakt-Störströme, die von den Polen der Sekundärseite des Leistungsübertragers und den damit verbundenden Lampenzuleitungen jeweils über parasitäre Kapazitäten zur Bezugserde bzw. zur Umgebung fließen, können somit vollständig kompensiert werden.

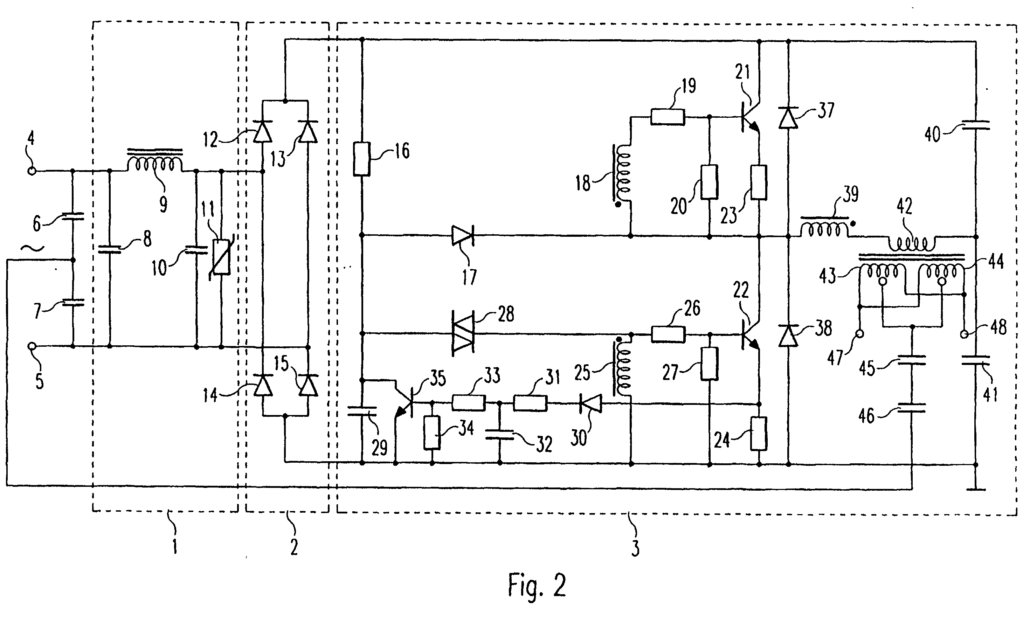

Figur 2 zeigt ein zweites Ausführungsbeispiel eines erfindungsgemäßen elektronischen Transformators. Die den in Figur 1 gezeigten Bauteilen entsprechenden Bauteile des elektronischen Transformators sind mit identischen Bezugszeichen versehen, so daß auf eine wiederholte Beschreibung dieser Bauelemente verzichtet wird.

Der in Figur 2 dargestellte elektronische Transformator unterscheidet sich von dem in Figur 1 gezeigten Ausführungsbeispiel lediglich dadurch, daß die Kurzschlußschaltung mit den Kondensatoren 45 und 46 nicht an einem Pol bzw. einer Klemme der Sekundärseite 43, 44 des Leistungsübertragers angreift, sondern jeweils mit einem Mittelabgriff der einzelnen Sekundärwicklungen 43, 44 verbunden ist. Durch diese schaltungstechnische Maßnahme kann eine weiter verbesserte Symmetrierung der Potentiale an den Polen der Sekundärseite des Leistungsübertragers gegenüber der Bezugserde erzielt werden. Auch bezüglich des in Figur 2 dargestellten Ausführungsbeispiels ist zu bemerken, daß selbstverständlich auch lediglich eine Sekundärwicklung oder mehr als zwei parallel geschaltete Sekundärwicklungen eingesetzt werden können. Durch die Verwendung von mehreren parallel geschalteten Sekundärwicklungen 43, 44 kann vorteilhafterweise die durch den Leistungsübertrager hervorgerufenen Verluste verringert werden. Des weiteren ist alternativ zu dem in Figur 2 dargestellten Ausführungsbeispiel auch möglich, daß die Kurzschlußschaltung mit den Kondensatoren 45 und 46 an lediglich einen Mittelangriff einer der Sekundärwicklungen 43, 44 des Leistungsübertragers angreift.

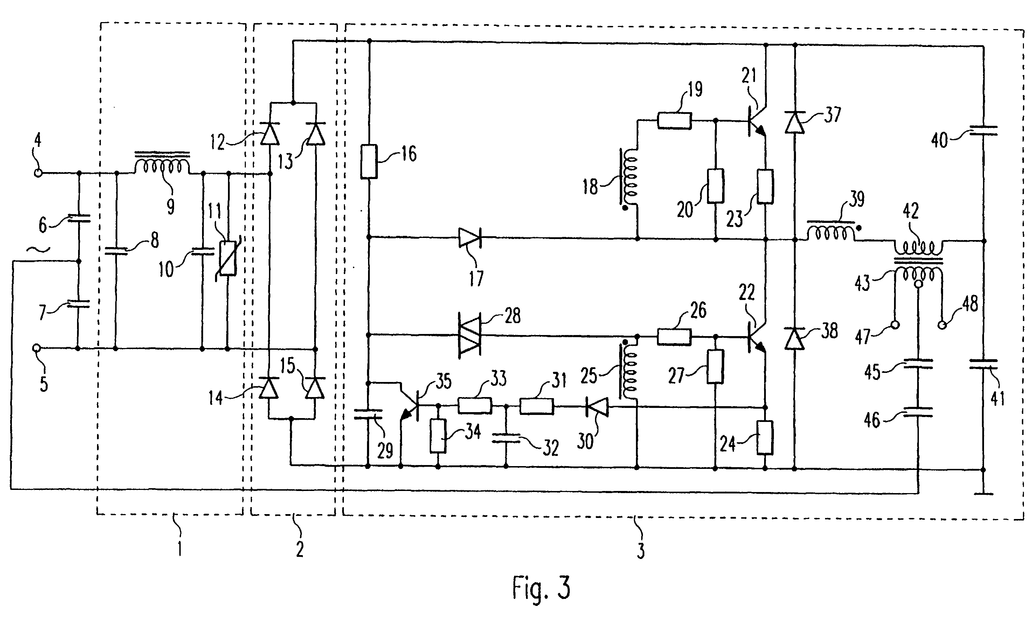

Figur 3 zeigt ein drittes Ausführungsbeispiel der vorliegenden Erfindung, wobei in Übereinstimmung mit Figur 2 wiederum die Kurzschlußschaltung mit den Kondensatoren 45, 46 nicht an den Polen der Sekundärseite des Leistungsübertragers angreift, sondern mit einem Mittelabgriff einer Sekundärwicklung 43 des Leistungsübertragers verbunden ist. Im Gegensatz zu Figur 2 umfaßt jedoch bei dem in Figur 3 dargestellten Ausführungsbeispiel der Leistungsübertrager lediglich eine mit der Primärwicklung 42 gekoppelte Sekundärwicklung 43, deren Pole die Ausgangsanschlüsse 47 und 48 für die anzuschließende Last bilden.

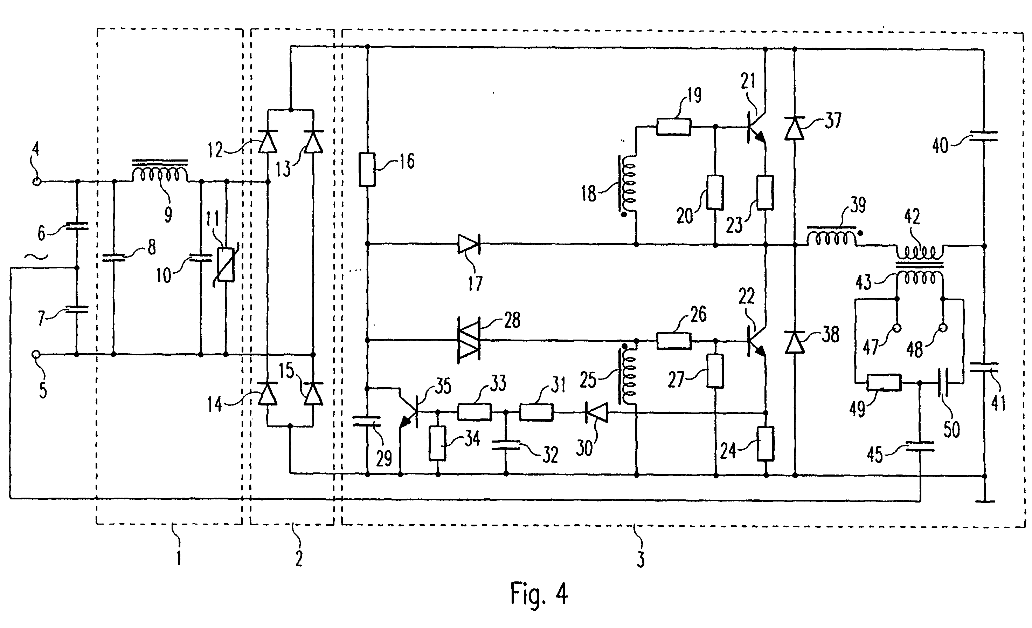

Figur 4 zeigt abschließend ein viertes Ausführungsbeispiel der vorliegenden Erfindung, wobei das Prinzip der vorliegenden Erfindung, nämlich die Verwendung einer kapazitiven Symmetrierschaltung, die das Bezugspotential für die Kurzschlußschaltung des elektronischen Transformators bildet, mit einer im Prinzip bereits in der EP-A-0707435 vorgeschlagenen weiteren Symmetrierschaltung kombiniert ist. Diese weitere Symmetrierschaltung greift insbesondere an die beiden Pole 47, 48 der Sekundärseite des Leistungsübertragers an, wobei gemäß dem in Figur 4 dargestellten Ausführungsbeispiel lediglich eine Sekundärwicklung 43 vorhanden ist. Die an der Sekundärwicklung 43 angreifende Symmetrierschaltung umfaßt insbesondere passive Bauelemente, wie z. B. Kondensatoren, Widerstände oder Spulen bzw. eine Kombination dieser Bauelemente. Insbesondere kann diese Symmetrierschaltung ein RC-Netzwerk aufweisen, was in Figur 4 beispielhaft durch einen Widerstand 49 und einen Kondensator 50 angedeutet ist. Diese Symmetrierschaltung ist mit der Hochfrequenz-Kurzschlußschaltung verbunden, wobei gemäß dem in Figur 4 gezeigten elektronischen Transformator diese Hochfrequenz-Kurzschlußschaltung lediglich durch einen Kondensator 45 gebildet ist, dessen anderes Ende mit dem Symmetriermittelpunkt des kapazitiven Spannungsteilers 6, 7 verbunden ist. Der Einsatz der an die Sekundärseite des Leistungsübertragers angeschlossenen zusätzlichen Symmetrierschaltung trägt dazu bei, eine verbesserte Symmetrierung der Potentiale der beiden Pole der Sekundärseite gegenüber der Bezugserde zu erzielen, da in diesem Fall die Hochfrequenz-Kurzschlußschaltung mit dem Kondensator 45 über die Symmetrierschaltung mit beiden Polen der Sekundärwicklung 43 des Leistungsübertragers verbunden ist. Diese zusätzliche Symmetrierschaltung kann insbesondere vorteilhafterweise ein RC-Netzwerk aus zwei seriell miteinander verbundenen Parallelschaltungen aufweisen, wobei jede Parallelschaltung einen Widerstand und einen Kondensator umfaßt. In diesem Fall ist der Verbindungspunkt der beiden Parallelschaltungen mit der Hochfrequenz-Kurzschlußschaltung bzw. dem Kondensator 45 verbunden, während die freien Anschlüsse der beiden Parallelschaltungen jeweils mit einem der beiden Ausgangsanschlüsse 47, 48 gekoppelt sind. Selbstverständlich kann anstelle der in Figur 4 dargestellten Konfiguration auch in Übereinstimmung mit den in Figur 1 und 2 dargestellten Ausführungsbeispielen ein Leistungsübertrager mit zwei oder mehr parallel geschalteten Sekundärwicklungen 43, 44 verwendet werden, wobei in diesem Fall die (durch die Bauelemente 49, 50 dargestellte) Symmetrierschaltung an die gemeinsamen Pole bzw. Ausgangsanschlüsse 47, 48 dieser parallel geschalteten Sekundärwicklungen 43, 44 des Leistungsübertragers angreift.

## Patentansprüche

1. Elektronischer Transformator zum Betreiben einer Last,
mit Wandlermitteln (3), die eine an Versorgungsspannungsleitungen anliegende Versorgungsspannung in eine hochfrequente Ausgangsspannung umwandeln, mit einem Übertrager (42-44), der die Ausgangsspannung der Wandlermittel (3) in eine Betriebsspannung für die Last umwandelt und die Betriebsspannung über mit der Sekundärseite (43, 44) des Übertragers gekoppelte Ausgangsanschlüsse (47, 48) des elektronischen Transformators bereitstellt, und
mit einer Kurzschlußschaltung (45, 46), welche die Sekundärseite (43, 44) des Übertragers mit einem Bezugspotential wechselstrommäßig kurzschließt,
**gekennzeichnet durch**
eine mit den Versorgungsspannungsleitungen gekoppelte kapazitive Symmetrierschaltung (6, 7), wobei ein Symmetriermittelpunkt der kapazitiven Symmetrierschaltung (6, 7) dem Bezugspotential für die Kurzschlußschaltung (45, 46) entspricht und mit der Kurzschlußschaltung (45, 46) verbunden ist, und
wobei die Kurzschlußschaltung wenigstens einen Kondensator (45, 46) umfaßt.

2. Elektronischer Transformator nach Anspruch 1,
**dadurch gekennzeichnet,**
**daß** die Kurzschlußschaltung mehrere in Serie geschaltete Kondensatoren (45, 46) umfaßt.

3. Elektronischer Transformator nach Anspruch 1 oder 2,
**dadurch gekennzeichnet,**
**daß** die kapazitive Symmetrierschaltung einen kapazitiven Spannungsteiler mit mindestens zwei Kondensatoren (6, 7) umfaßt, wobei der Knotenpunkt zwischen den beiden Kondensatoren (6, 7) dem Symmetriermittelpunkt der kapazitiven Symmetrierschaltung entspricht und mit der Kurzschlußschaltung (45, 46) verbunden ist.

4. Elektronischer Transformator nach Anspruch 3,
**dadurch gekennzeichnet,**
**daß** die beiden Kondensatoren (6, 7) der kapazitiven Symmetrierschaltung jeweils eine Kapazität von ca. 12nF und der oder die Kondensatoren der Kurzschlußschaltung (45, 46) eine Kapazität von ca. 1,5nF aufweisen.

5. Elektronischer Transformator nach einem der vorhergehenden Ansprüche,
**gekennzeichnet durch**
einen Gleichrichter (2), der die Versorgungsspannung gleichrichtet und den Wandlermitteln (3) zuführt.

6. Elektronischer Transformator nach Anspruch 5,
**dadurch gekennzeichnet,**
**daß** zwischen die kapazitive Symmetrierschaltung (6, 7) und den Gleichrichter (2) ein Eingangsfilter (1) geschaltet ist.

7. Elektronischer Transformator nach einem der vorhergehenden Ansprüche,
**dadurch gekennzeichnet,**
**daß** die Wandlermittel (3) durch einen Wechselrichter mit zwei alternierend schaltenden Schaltern (21, 22) realisiert sind.

8. Elektronischer Transformator nach einem der vorhergehenden Ansprüche,
**dadurch gekennzeichnet,**
**daß** der Übertrager (42, 43) nur eine mit den Ausgangsanschlüssen (47, 48) des elektronischen Transformators gekoppelte Sekundärwicklung (43) aufweist.

9. Elektronischer Transformator nach Anspruch 8,
**dadurch gekennzeichnet,**
**daß** die Kurzschlußschaltung (45, 46) zwischen den Symmetriermittelpunkt der kapazitiven Symmetrierschaltung (6, 7) und einen Mittelabgriff der Sekundärwicklung (43) des Übertragers (42, 43) geschaltet ist.

10. Elektronischer Transformator nach einem der Ansprüche 1 bis 7,
**dadurch gekennzeichnet,**
**daß** der Übertrager (42-44) mindestens zwei mit den Ausgangsanschlüssen (47, 48) des elektronsichen Transformators gekoppelte parallelgeschaltete Sekundärwicklungen (43, 44) aufweist.

11. Elektronischer Transformator nach Anspruch 8 oder 10,
**dadurch gekennzeichnet,**
**daß** die Kurzschlußschaltung (45, 46) zwischen den Symmetriermittelpunkt der kapazitiven Symmetrierschaltung (6, 7) und einen der Ausgangsanschlüsse (47, 48) geschaltet ist.

12. Elektronischer Transformator nach Anspruch 10,
**dadurch gekennzeichnet,**
**daß** die Kurzschlußschaltung (45, 46) zwischen den Symmetriermittelpunkt der kapazitiven Symmetrierschaltung (6, 7) und mindestens einen Mittelabgriff der Sekundärwicklungen (43, 44) des Übertragers (42-44) geschaltet ist.

13. Elektronischer Transformator nach Anspruch 8 oder 10,
**dadurch gekennzeichnet,**
**daß** die Kurzschlußschaltung (45, 46) über eine weitere Symmetrierschaltung (49, 50) an die beiden Ausgangsanschlüsse (47, 48) des elektronischen Transformators angeschlossen ist.

14. Elektronischer Transformator nach Anspruch 13,
**dadurch gekennzeichnet,**
**daß** die weitere Symmetrierschaltung (49, 50) passive Bauelemente aufweist.

15. Elektronischer Transformator nach Anspruch 14,
**dadurch gekennzeichnet,**
**daß** die weitere Symmetrierschaltung (49, 50) ein Widerstand-Kondensator-Netzwerk umfaßt.

16. Elektronischer Transformator nach einem der vorhergehenden Ansprüche,
**dadurch gekennzeichnet,**
**daß** die kapazitive Symmetrierschaltung (6, 7) zwischen die Versorgungsspannungsleitungen geschaltet ist.

17. Elektronischer Transformator nach Anspruch 16,
**dadurch gekennzeichnet,**
**daß** die kapazitive Symmetrierschaltung (6, 7) an Eingangsanschlüsse (4, 5) des elektronischen Transformators, an denen die Versorgungsspannung anliegt, angeschlossen ist.

## Claims

1. Electronic transformer for operating a load,
having conversion means (3) which convert a supply voltage applied to supply voltage lines into a high frequency output voltage, having a transformer (42-44) which converts the output voltage of the conversion means (3) into an operating voltage for the load and makes the operating voltage available via output terminals (47, 48) of the electronic transformer coupled with the secondary side (43, 44) of the transformer, and
having a shorting circuit (45, 46) which, in terms of a.c. current, short-circuits the secondary side (43, 44) of the transformer with a reference potential,
**characterized by**
a capacitive balancing circuit (6, 7) coupled with the supply voltage lines, wherein a balancing middle point of the capacitive balancing circuit (6, 7) corresponds to the reference potential for the shorting circuit (45, 46) and is connected with the shorting circuit (45, 46), and
wherein the shorting circuit includes at least one capacitor (45,46).

2. Electronic transformer according to claim 1,
**characterized in that**,
the shorting circuit includes a plurality of capacitors (45, 46) connected in series.

3. Electronic transformer according to claim 1 or 2,
**characterized in that**,
the capacitive balancing circuit includes a capacitive voltage divider having at least two capacitors (6, 7) wherein the node point between the two capacitors (6, 7) corresponds to the balancing middle point of the capacitive balancing circuit and is connected with the shorting circuit (45, 46).

4. Electronic transformer according to claim 3,
**characterized in that**,
the two capacitors (6, 7) of the capacitive balancing circuit have each a capacitance of ca. 12nF and the capacitor or capacitors of the shorting circuit (45, 46) have a capacitance of ca. 1.5nF.

5. Electronic transformer according to any preceding claim,
**characterized by**
a rectifier (2) which rectifies the supply voltage and supplies the conversion means (3).

6. Electronic transformer according to claim 5,
**characterized in that**,
an input filter (1) is connected between the capacitive balancing circuit (6, 7) and the rectifier (2).

7. Electronic transformer according to any preceding claim,
**characterized in that**,
the conversion means (3) are realized by means of an inverter having two alternatingly switching switches (21, 22).

8. Electronic transformer according to any preceding claim,
**characterized in that**,
the transformer (42, 43) has only one secondary winding (43) coupled with the output terminals (47, 48) of the electronic transformer.

9. Electronic transformer according to claim 8,
**characterized in that**,
the shorting circuit (45, 46) is connected between the balance middle point of the capacitive balancing circuit (6, 7) and a middle tap of the secondary winding (43) on the transformer (42, 43) .

10. Electronic transformer according to any of claims 1 to 7,
**characterized in that**,
the transformer (42-44) has at least two parallel-connected secondary windings (43, 44) coupled with the output terminals (47, 48) of the electronic transformer.

11. Electronic transformer according to claim 8 or 10,
**characterized in that**,
the shorting circuit (43, 46) is connected between the balance middle point of the capacitive balancing circuit (6, 7) and one of the output terminals (47, 48).

12. Electronic transformer according to claim 10,
**characterized in that**,
the shorting circuit (43, 46) is connected between the balance middle point of the capacitive balance circuit (6, 7) and at least one middle tap of the secondary windings (43, 44) of the transformer (42-44).

13. Electronic transformer according to claim 8 or 10,
**characterized in that**,
the shorting circuit (45, 46) is connected to the two output terminals (46, 48) of the electronic transformer via a further balancing circuit (49, 50).

14. Electronic transformer according to claim 13,
**characterized in that**,
the further balancing circuit (49, 50) has passive components.

15. Electronic transformer according to claim 14,
**characterized in that**,
the further balancing circuit (49, 50) includes a resistance-capacitance network.

16. Electronic transformer according to any preceding claim,
**characterized in that**,
the capacitive balancing circuit (6, 7) is connected between the supply voltage lines.

17. Electronic transformer according to claim 16,
**characterized in that**,
the capacitive balancing circuit (6, 7) is connected to input terminals (4, 5) of the electronic transformer to which the supply voltage is applied.

## Revendications

1. Transformateur électronique destiné à exploiter une charge, lequel transformateur comporte
des moyens convertisseurs (3) qui convertissent une tension d'alimentation, appliquée à des lignes de tension d'alimentation, en tension de sortie de haute fréquence,
un transformateur (42-44) qui transforme la tension de sortie des moyens convertisseurs (3) en une tension de fonctionnement pour la charge et qui délivre la tension de fonctionnement aux bornes de sortie (47, 48) du transformateur électronique qui sont couplées au secondaire (43, 44) du transformateur, et
un circuit de shunt (45, 46) qui court-circuite en alternatif le secondaire (43, 44) du transformateur avec un potentiel de référence,
**caractérisé par** un circuit d'équilibrage capacitif (6, 7) couplé aux lignes d'alimentation en tension,
un point d'équilibrage médian du circuit d'équilibrage capacitif (6, 7) correspondant au potentiel de référence pour le circuit de shunt (45, 46) et étant relié au circuit de shunt (45, 46), et
le circuit de shunt comportant au moins un condensateur (45, 46).

2. Transformateur électronique selon la revendication 1, **caractérisé en ce que** le circuit de shunt comporte plusieurs condensateurs (45, 46) montés en série.

3. Transformateur électronique selon la revendication 1 ou 2, **caractérisé en ce que** le circuit d'équilibrage capacitif comporte un diviseur de tension capacitif comprenant au moins deux condensateurs (6, 7), le point nodal entre les deux condensateurs (6, 7) correspondant au point d'équilibrage médian du circuit d'équilibrage capacitif et étant relié au circuit de shunt (45, 46).

4. Transformateur électronique selon la revendication 3, **caractérisé en ce que** les deux condensateurs (6, 7) du circuit d'équilibrage capacitif ont chacun une capacité de 12 nF environ et le condensateur ou les condensateurs du circuit de shunt (45, 46) ont une capacité de 1,5 nF environ.

5. Transformateur électronique selon l'une des revendications précédentes, **caractérisé par** un redresseur (2) qui redresse la tension d'alimentation et l'amène aux moyens convertisseurs (3).

6. Transformateur électronique selon la revendication 5, **caractérisé en ce qu'**un filtre d'entrée (1) est monté entre le circuit d'équilibrage capacitif (6, 7) et le redresseur (2).

7. Transformateur électronique selon l'une des revendications précédentes, **caractérisé en ce que** les moyens convertisseurs (3) sont réalisés par un onduleur comportant deux commutateurs (21, 22) commutant de façon alternée.

8. Transformateur électronique selon l'une des revendications précédentes, **caractérisé en ce que** le transformateur (42, 43) ne comporte qu'un enroulement secondaire (43) couplé aux bornes de sortie (47, 48) du transformateur électronique.

9. Transformateur électronique selon la revendication 8, **caractérisé en ce que** le circuit de shunt (45, 46) est monté entre le point d'équilibrage médian du circuit d'équilibrage capacitif (6, 7) et une prise médiane de l'enroulement secondaire (43) du transformateur (42, 43).

10. Transformateur électronique selon l'une des revendications 1 à 7, **caractérisé en ce que** le transformateur (42-44) comporte au moins deux enroulements secondaires (43, 44) montés en parallèle et couplés aux bornes de sortie (47, 48) du transformateur électronique.

11. Transformateur électronique selon la revendication 8 ou 10, **caractérisé en ce que** le circuit de shunt (45, 46) est monté entre le point d'équilibrage médian du circuit d'équilibrage capacitif (6, 7) et l'une des bornes de sortie (47, 48).

12. Transformateur électronique selon la revendications 10, **caractérisé en ce que** le circuit de shunt (45, 46) est monté entre le point d'équilibrage médian du circuit d'équilibrage capacitif (6, 7) et au moins une prise médiane des enroulements secondaires (43, 44) du transformateur (42-44).

13. Transformateur électronique selon la revendication 8 ou 10, **caractérisé en ce que** le circuit de shunt (45, 46) est raccordé aux deux bornes de sortie (47, 48) du transformateur électronique via un autre circuit d'équilibrage (49, 50).

14. Transformateur électronique selon la revendication 13, **caractérisé en ce que** l'autre circuit d'équilibrage (49, 50) comporte des composants passifs.

15. Transformateur électronique selon la revendication 14, **caractérisé en ce que** l'autre circuit de shunt (49, 50) comporte un réseau de résistances et de condensateurs.

16. Transformateur électronique selon l'une des revendications précédentes, **caractérisé en ce que** le circuit d'équilibrage capacitif (6, 7) est monté entre les lignes de tension d'alimentation.

17. Transformateur électronique selon la revendication 16, **caractérisé en ce que** le circuit d'équilibrage capacitif (6, 7) est raccordé aux bornes d'entrée (4, 5) du transformateur électronique auxquelles est appliquée la tension d'alimentation.
